Europäisches Patentamt

European Patent Office

Office européen des brevets

(19)

(11) Numéro de publication: **0 089 864**
**B1**

(12) **FASCICULE DE BREVET EUROPÉEN**

(45) Date de publication du fascicule du brevet:
23.07.86

(51) Int. Cl.⁴: **E 05 F 11/48,** E 05 F 11/38

(21) Numéro de dépôt: **83400416.0**

(22) Date de dépôt: **01.03.83**

(54) **Organe composite, notamment curseur de lève-glace pour véhicule automobile.**

(30) Priorité: **22.03.82 FR 8204819**

(43) Date de publication de la demande:
**28.09.83 Bulletin 83/39**

(45) Mention de la délivrance du brevet:
**23.07.86 Bulletin 86/30**

(84) Etats contractants désignés:
**DE GB IT SE**

(56) Documents cité:
**FR-A-2 159 152**
**FR-A-2 398 917**
**GB-A-2 019 484**
**US-A-3 427 748**
**US-A-3 720 449**

(73) Titulaire: **COMPAGNIE INDUSTRIELLE DE MECANISMES en abrégé C.I.M. Société dite:, 6, Rue Barbès, F-92302 Levallois- Perret (FR)**

(72) Inventeur: **Crossonneau, Denis, 2 Place Henri IV, F-45600 Sully Sur Loire (FR)**

(74) Mandataire: **Moncheny, Michel, c/o Cabinet Lavoix 2 Place d'Estienne d'Orves, F-75441 Paris Cedex 09 (FR)**

EP 0 089 864 B1

## Description

La présente invention est relative aux curseurs, notamment pour lève-glace d'automobile, et s'applique plus généralement aux divers types d'organes composites comprenant au moins deux pièces et destinés à coopérer avec un élément de positionnement ou de guidage (voir le US-A-3427748).

Les curseurs de lève-glace d'automobiles comprennent généralement une plaque de base métallique pourvue d'au moins un patin moulé en matière plastique destiné à coulisser le long d'un rail de guidage. Du fait des efforts importants auxquels est soumis le curseur et de la précision du guidage qui est nécessaire, on ne peut envisager de fixer le patin par des moyens classiques simples tels qu'n encliquetage. C'est pourquoi le patin est généralement surmoulé sur la plaque de base, ce qui conduit à des performances mécaniques satisfaisantes.

Cependant, ce procédé est relativement coûteux, car il utilise la machine de moulage avec de nombreux temps morts correspondant à la mise en place de la plaque de base dans le moule et à l'évacuation de curseur terminé. Or, le temps d'utilisation de la machine est cher.

On connaît également par le document US-A-3427748, des curseurs de lève-glace comportant des patins en matière plastique rivetés ou encliquetés sur la plaque de base et qui présentent des fentes dans lesquelles coulisse le rail de guidage. Ces curseurs ne donnent pas des performances mécaniques satisfaisantes, ne sont pas fermement assujettis au rail de guidage, et nécessitent un temps relativement long de montage des patins sur la plaque de base.

L'invention a pour but de fournir un moyen d'assemblage de ces curseurs ou d'organes composites analogues qui soit plus économique à performances mécaniques égales.

A cet effet, l'invention a pour objet, de façon générale, un organe composite comprenant au moins deux pièces et destiné à coopérer avec un élément de positionnement ou de guidage, caratérisé en ce que chacun des deux côtés horizontaux de la plaque de base comporte une encoche réception du patin correspondant, qui est profilée intérieurement en conjugaison avec le patin de façon que ce dernier puisse être encliqueté dans l'encoche et empêché de ce fait de s'extraire de ladite encoche par un mouvement inverse de celui ayant permis son introduction.

Dans une application particulière, l'invention a également pour objet un curseur, notamment pour lève-glace d'automobile, du type comprenant une plaque de base pourvue de deux patins moulés destinés à coulisser le long d'un rail, les patins sont mis en place dans leurs encoches respectives par de mouvements symétriques par rapport à un plan perpendículaire au rail.

Dans une forme de réalisation de ce curseur, la ou chaque encoche a une forme générale rectangulaire et présente sur un bord une pointe et sur le bord opposé un dégagement, le ou chaque patin étant pourvu sur trois côtés d'une rainure d'emboîtement dont un côté présente un bec adapté pour s'insérerer derrière la pointe par un mouvement de rotation de patin autour du sommet de celle-ci.

L'invention est exposée ci-après en détail à l'aide du dessin annexé, qui en représentante seulement un mode d'exécution. Sur ce dessin:

la Fig. 1 est une vue en plan, avec arrachement partiel, d'un curseur de lève-glace conforme à l'invention;

la Fig. 2 est une vue prise en coupe suivant la ligne 2—2 de la Fig. 1;

la Fig. 3 est une vue en coupe d'un patin de ce curseur;

la Fig. 4 illustre le montage d'un patin; et

les Fig 5 et 6 sont respectivement une vue partielle de curseur et une vue en coupe du patin d'une variante.

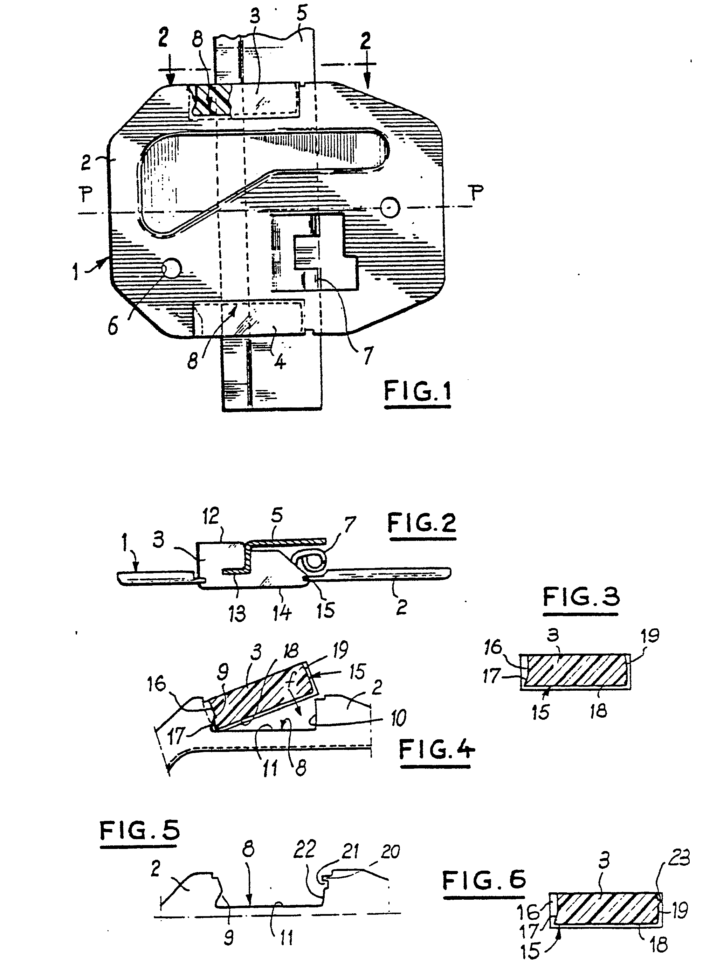

Le curseur 1 représenté aux Fig. 1 et 2 est constitué d'une plaque de base 2 en tôle de forme générale plane et rectangulaire et de deux patins 3, 4 moulés en matière plastique, montés sur la plaque 2. Le curseur 1 est destiné à coulisser le long d'un rail 5 sensiblement rectiligne qui, lorsqu'il est monté sur un véhicule, est normalement disposé verticalement, comme représenté.

La plaque de base 2 comporte des trous 6 destinés à la fixation d'un bas de glace (non représenté) et un organe 7 de fixation sur un élément souple d'actionnement (non représenté) relié à un dispositif d'enroulement (non représenté). Chacun des deux côtés horizontaux de cette plaque présente une encoche 8 de forme générale rectangulaire dans laquelle est logé un patin 3 ou 4. Les enchoches 8 ainsi que les deux patins son l'image réfléchie les uns des autres par rapport à un plan horisontal P passant par le centre du curseur 2.

Comme on le voit mieux à la Fig. 4, chaque encoche 8 comporte une pointe 9 en V très ouvert en saillie vers l'intérieur sur un de ses petits côtés verticaux. L'angle au sommet du V est dans cet exemple de l'ordre de 130°. L'autre petit côté vertical 10 de l'encoche a la forme d'un arc de cercle centré sur le sommet de la pointe 9, lequel se trouve à mi-profondeur de l'encoche. Le fond 11 de cette dernière est rectiligne et horizontal.

Chaque patin 3, 4 est constitué d'un bloc de matière plastique moulé qui possède une forme générale parallélépipédique et comporte à partir de sa face arrière 12 une fente 13 en L qui le traverse verticalement. Près de sa face avant 14, le patin est bordé sur trois côtés par une rainure d'emboîtement 15.

En considérant le patin supérieur 3, la rainure 15 s'étend sur ses deux petits côtés verticaux et sur son grand côté inférieur. Comme on le voit aux Fig. 1 et 3, cette rainure a un profil conjugué de celui de l'encoche 8 supérieure, à ceci près que le côté supérieur du V 9 est remplacé par un demi-côté 16 formant un V plus ouvert, dans cet exemple par un demi-côté vertical. La rainure 15 comporte donc successivement ce demi-côté 16, un demi-côté 17 incliné vers le bas et vers l'extérieur formant un bec, un grand côté rectiligne 18, et un petit côté 19 en arc de cercle centré sur l'intersection des demi-côtés 16 et 17.

La mise en place du patin 3 est illustrée sur la Fig. 4: on amène ce patin obliquement, en appliquant le demi-côté 16 contre le côté supérieur du V 9, puis on fait tourner le patin autour de sommet de ce V dans le sens de la flèche f. Le côté curviligne 19 du patin glisse alors le long du côté conjugué 10 de l'encoche, jusqu'à ce que le grand côté 18 du patin bute sur le grand côté ou fond 11 de l'encoche.

Lorsque les deux patins 3 et 4 sont ainsi mis en place symétriquement dans les deux encoches 8, les fentes 13 sont exactement superposées; on peut donc enfiler successivement les deux patins sur le rail 5, qui présente un profil en L conjugué. La coopération des patins avec le rail interdit aux patins d'effectuer par rapport à la plaque 2 un mouvement de rotation inverse de celui qui en a permis le montage, et le déboîtement vertical des patins est rendu impossible par la contre-dépouille du V 9 et de l'arc de cercle 10.

L'assemblage ainsi obtenu est précis et fiable et est capable de supporter des efforts élevés. De plus, la machine de moulage verst utilisée que pour le moulage proprement dit des deux patins, le reste du temps de fabrication étant consacré au montage des deux patins moulés sur la plaque 2 de la façon décrite plus haut, montage qui est une opération beaucoup moins coûteuse. Le prix de revient du curseur peut ainsi être considérablement réduit.

En variante, l'arc de cercle 10 peut être remplacé par d'autres profils, pourve que ces profils permettent d'effectuer le mouvement de rotation des patins décrit plus haut et assurent la retenue du patin, en coopérant avec le V 9, lorsque ce patin est sollicité en translation vers l'ouverture de son encoche 8. La Fig. 5 montre un exemple d'un tel profil, constitué, à partir de l'entrée de l'encoche, d'un bec 20, d'un évidement 21 et d'un segment d'arc de cercle 22 correspondant à l'arc de cercle 10 et se raccordant au fond 11 de l'encoche.

Une telle encoche 8 reçoit alors un patin 3 tel que représentanté à la Fig. 6; dans ce cas, le petit côté 19 en arc de cercle de la rainure 15 du patin 3 comporte un ergot 23 en saillie qui s'encliquette derrière le bec 20 dans l'évidement 21 pour constituer une retenue provisoire du patin dans l'encoche 8 avant et pendant l'introduction de rail 5 dans la fente 13, ceci afin de faciliter ce montage. Ensuite, l'encliquetage 20—23 ne joue plus le rôle de retenue du patin, puisque le rail 5 remplit à lui seul cette fonction, comme explique plus haut.

## Revendications

1. — Curseur pour lève-glace d'automobile, comprenant une plaque de base (2) pourvue d'au moins un patin (3, 4) destiné à coulisser le long d'un rail (5) de guidage; caractérisé en ce que chacun des deux côtés horizontaux de la plaque de base (2) comporte une encoche (8) de réception du patin correspondant (3, 4), qui est profilée intérieurement en conjugaison avec le patin de façon que ce dernier puisse être encliqueté dans l'encoche (8) et empêché de ce fait de s'extraire de ladite encoche par un mouvement inverse de celui ayant permis son introduction.

2. — Curseur suivant la revendication 1, caractérisé en ce qui l'encoche (8) présente sur au moins un côté un profil (9, 10) en contre-dépouille.

3. — Curseur suivant l'une des revendications 1 et 2, comprenant deux patins (3, 4), caractérisé en ce que les patins sont mis en place dans leurs encoches respectives (8) par des mouvements symétriques par rapport à un plan (P) perpendiculaire au rail (5).

4. — Curseur suivant l'une quelconque des revendications 1 à 3, caractérisé en ce que la ou chaque encoche (8) a une forme générale rectangulaire et présente sur un bord une pointe (9) et sur le bord opposé un dégagement (10, 20 à 22), le ou chaque patin étant pourvu sur trois côtés d'une rainure d'emboîtement (15) dont un côté présente un bec (17) adapté pour s'insérer derrière la pointe (9) par un mouvement de rotation de patin autour du sommet de celle-ci.

5. — Curseur suivant la revendication 4, caractérisé en ce que le dégagement (10) a la forme d'un arc de cercle centré sur le sommet de la pointe (9).

6. — Curseur suivant la revendication 5, caractérisé en ce que la rainure d'emboîtement (15) a un profil conjugué de celui de l'encoche (8), le côté extérieur de la pointe étant toutefois remplacé par un demi-côté (16) de la rainure qui forme un V plus ouvert avec le demi-côté adjacent (17).

7. — Curseur suivant l'une quelconque des revendications 1 à 6, caractérisé en ce que le patin (3, 4) et l'encoche (8) présentent des reliefs d'encliquetage (20, 23) qui assurant la retenue provisoire du patin dans l'encoche.

## Patentansprüche

1. Schieber für einen Kraftfahrzeug-Fensterheber, mit einer Grundplatte (2), die mit wenigstens einem Schuh (3, 4) versehen ist, der längs einer Führungsschiene (5) gleiten soll, dadurch gekennzeichnet, daß jede der beiden waagrechten Seiten der Grundplatte (2) zur Aufnahme des entsprechenden Schuhs (3, 4) eine Vertiefung (8) aufweist, die innen in Anpassung an den Schuh derart profiliert ist, daß dieser letztere in die Vertiefung (8) einrastet und hierdurch daran gehindert werden kann, aus der Vertiefung durch eine Bewegung herausgezogen zu werden, die zu der sein Einführen gestattenden Bewegung entgegengesetzt ist.

2. Schieber nach Anspruch 1, dadurch gekennzeichnet, daß die Vertiefung (8) an wenigstens einer Seite ein hinterschnittenes Profil (9, 10) aufweist.

3. Schieber nach einem der Ansprüche 1 und 2 mit zwei schuhen (3, 4), dadurch gekennzeichnet, daß die Schuhe in ihre jeweiligen Vertiefungen (8) durch Bewegungen eingesetzt werden, die gegenüber einer zur Schiene (5) senkrechten Ebene P symmetrisch sind.

4. Schieber nach einem der Ansprüche 1—3, dadurch gekennzeichnet, daß die oder jede Vertiefung (8) eine allgemein rechteckige Form hat und an einem Rand eine Ecke (9) sowie am gegenüberliegenden Rand eine Ausnehmung (10, 20—22) aufweist, wobei der oder jeder Schuh auf drei Seiten mit einer Einschiebenut (15) versehen ist, von der eine Seite eine Nase (17) aufweist, die durch eine Drehbewegung des Schuhs um dessen Scheitel hinter die Ecke (9) eingesetzt werden kann.

5. Schieber nach Anspruch 4, dadurch gekennzeichnet, daß die Ausnehmung (10) die Form eines auf den Scheitel der Ecke (9) zentrierten Kreisbogens hat.

6. Schieber nach Anspruch 5, dadurch gekennzeichnet, daß die Einschiebenut (15) ein Profil hat, das mit demjenigen der Vertiefung (8) zusammenpaßt, wobei die Außenseite der Ecke jedenfalls durch eine Halbseite (16) der Nut ersetzt ist, die mit der angrenzenden Halbseite (17) ein offeneres V bildet.

7. Schieber nach einem der Ansprüche 1—6, dadurch gekennzeichnet, daß der Schuh (3, 4) und die Vertiefung (8) Einrastprofile (20, 23) aufweisen, die das provisorische Halten des Schuhs in der Vertiefung gewährleisten.

## Claims

1. A slide for a window raiser of an automobile, comprising a base plate (2) at least one shoe (3, 4) adapted to slide along a guide rail, characterized in that each of the two horizontal sides of the base plate (2) has a notch (8) for receiving the corresponding shoe (3, 4) which has an internal contour cooperative with the shoe in such manner that the latter can be clipped into the notch (8) and thereby prevented from being extracted from said notch by a movement which is the opposite of that which caused its introduction.

2. A slide according to claim 1, characterized in that the notch (8) has on at least one side an undercut contour (9, 10).

3. A slide according to one of the claims 1 and 2, comprising two shoes (3, 4), characterized in that the shoes are put into position in their respective notches (8) by movements which are symmetrical with respect to a plane P perpendicular to the rail (5).

4. An slide according to any one of the claims 1 to 3, characterized in that the or each notch (8) has a generally rectangular shape and has on one edge a point (9) and on the opposite edge a recess (10, 20 to 22), the or each shoe being provided on three sides with a fitting groove (15), one side of which has a nose portion (17) adapted to be inserted behind the point (9) by a movement of rotation of the shoe about the apex of the point.

5. A slide according to claim 4, characterized in that the recess (10) has the shape of an arc of a circle centered on the apex of the point (9).

6. A slide according to claim 5, characterized in that the fitting groove (15) has a contour which is coopertive with that of the notch (8), the outer side of the point being however replaced by a semi-side (16) of the groove which forms a wider V with the adjacent semi-side (17).

7. A slide according to any one of the claims 1 to 6, characterized in that the shoe (3, 4) and the notch (8) have clipping reliefs (20, 23) which temporarily retain the shoe in the notch.

0 089 864

FIG.1

FIG.2

FIG.3

FIG.4

FIG.5

FIG.6